# FASCICULE DE BREVET EUROPEEN

(11) **EP 2 526 750 B1**
(45) Date de publication et mention de la délivrance du brevet: **26.02.2014**
(21) Numéro de dépôt: 12168846.9
(22) Date de dépôt: 22.05.2012
(51) Int. Cl.: A01B 59/042, A01D 78/10

(54) **Machine de fenaison**
Heuwerbungsmaschine
Haymaking machine

(30) Priorité: 24.05.2011 FR 1154505
(43) Date de publication de la demande: 28.11.2012
(73) Titulaire: KUHN S.A., 67700 Saverne (FR)
(72) Inventeur: Hoerner, Yannick, 57660 ERSTROFF (FR)
(74) Mandataire: Esch, Esther Evelyne

(56) Documents cités:
- FR-A1- 2 686 481
- FR-A1- 2 751 165
- FR-A1- 2 778 311
- FR-A1- 2 819 374

## Description

La présente invention se rapporte à une machine agricole de fenaison destinée à être attelée aux bras inférieurs d'un tracteur et comportant :
- un bâti supporté au sol par des roues,
- au moins un dispositif de travail relié au bâti, le bâti étant dans sa partie avant en liaison de pivotement avec un dispositif d'attelage conçu pour être connecté aux deux bras inférieurs, le centre de gravité de la machine étant situé entre les roues et le dispositif d'attelage.

Une telle machine est connue d'après le document FR 2 778 311. Celui-ci décrit une machine d'andainage du type semi-portée qui se compose d'un bâti dont la partie avant est en liaison de pivotement avec un dispositif d'attelage conçu pour s'atteler aux deux bras inférieurs situés à l'arrière d'un tracteur. La liaison de pivotement présente un axe sensiblement vertical. Le bâti est supporté dans sa partie arrière par deux roues. Deux dispositifs de travail sont articulés au bâti, l'un est disposé par rapport au bâti du côté gauche dans le sens d'avance et l'autre du côté droit, et chacun comporte son propre train de roues que l'on choisit de dénommer roues porteuses dans la suite du texte afin de les distinguer des roues supportant la partie arrière du bâti. Chacun des dispositifs de travail peut être déplacé entre une position de travail dans laquelle il s'étend latéralement suivant une direction sensiblement perpendiculaire au sens d'avance, et une position de transport dans laquelle il est relevé sensiblement à la verticale.

La machine précédemment décrite présente un certain nombre d'inconvénients dont l'exposé requiert de rappeler la définition du triangle de sustentation. Ce triangle imaginaire possède un premier côté formé par un plan vertical reliant le milieu de la roue gauche au milieu de la roue droite. Il possède un deuxième côté qui, lorsque la machine est en ligne droite, est formé par un plan vertical passant par le milieu de la roue gauche et par l'articulation entre le dispositif d'attelage et le bras inférieur gauche du tracteur, tandis que le troisième côté est formé par un plan vertical passant par le milieu de la roue droite et par l'articulation entre le dispositif d'attelage et le bras inférieur droit du tracteur. Sur un terrain sensiblement plat et en ligne droite, le centre de gravité de la machine est localisé à l'intérieur du triangle de sustentation. Toutefois, lorsque la machine subit une accélération latérale, il se peut qu'un seul des bras inférieurs soit en appui, auquel cas la machine précédemment décrite présente un défaut majeur. A titre d'exemple, si la machine subit une accélération latérale orientée vers la gauche, elle reste stable si c'est le bras inférieur gauche qui est en appui, tandis qu'elle risque de basculer si c'est le bras inférieur droit qui est en appui. Or, le fait que la liaison de pivotement susnommée ait un axe sensiblement vertical empêche de prédire lequel des bras inférieurs va être en appui lorsque la machine va subir une accélération latérale. Cette incertitude représente un risque pour la stabilité de la machine, lequel est aggravé par le fait que, lorsque la machine est en position de transport, son centre de gravité est situé à une distance importante du sol du fait de l'extension verticale des dispositifs de travail.

Au transport, la machine peut être amenée à suivre une trajectoire courbe, par exemple en virage ou au demi-tour en bout de parcelle. Dans cette situation, la force centrifuge peut faire sortir le centre de gravité du triangle de sustentation, ce qui provoque le basculement latéral de la machine. Ce phénomène est d'autant plus marqué que la vitesse de roulage est plus importante et que le rayon de courbure de la trajectoire est plus petit. Le phénomène sera encore aggravé si la manoeuvre est réalisée sur un champ présentant de nombreux creux et bosses, ou encore sur un champ en dévers et que le côté de la machine situé vers l'extérieur de la trajectoire courbe est, du fait du dévers, plus bas que le côté opposé. Il en résulte que l'agriculteur doit fortement ralentir le tracteur dans les virages. En sus, il doit opérer les manoeuvres de demi-tour à allure sensiblement réduite et/ou avec un rayon de braquage important, ce dernier engendrant des manoeuvres supplémentaires.

Au travail, une telle machine permet souvent de relever les dispositifs de travail à une faible distance du sol de manière à ce qu'ils n'entrent pas en contact avec le fourrage au sol. Dans cette position relevée, le train de roues porteuses de chaque dispositif de travail ne touche pas le sol. Il en résulte que les seules roues qui portent la machine sont celles à l'arrière du bâti. Or, les dispositifs de travail dans la position relevée s'étendent latéralement bien davantage que les roues à l'arrière du bâti. Ainsi, lorsque la machine suit une trajectoire courbe, elle est encore plus facilement déstabilisée qu'en position de transport. Pour diminuer ce risque, l'agriculteur doit circuler à vitesse réduite sur sa parcelle, ce qui le ralentit dans son travail.

La machine selon l'invention se propose de remédier aux inconvénients précités.

A cet effet, une importante caractéristique de l'invention réside dans le fait que la projection de l'axe de la liaison de pivotement sur un plan sensiblement vertical et sensiblement parallèle au sens d'avance, présente une inclinaison vers le sens d'avance en suivant une direction du sol vers le haut.

Il en résulte que lorsque le bâti pivote par rapport au dispositif d'attelage autour de cet axe de manière à suivre une trajectoire courbe, l'extrémité du dispositif d'attelage située du côté intérieur de la trajectoire est à une hauteur plus importante que l'extrémité opposée, ce qui génère un appui plus important sur le bras inférieur situé du côté extérieur de la trajectoire, tandis que le bras inférieur situé du côté intérieur de la trajectoire se trouve délesté. Le triangle de sustentation est alors forcé de passer par l'articulation entre le dispositif d'attelage et le bras inférieur situé du côté extérieur de la trajectoire. Cela réduit le risque que, sous l'effet d'une accélération latérale telle que l'accélération centrifuge, le centre de gravité ne sorte du triangle de sustentation et que la machine bascule vers l'extérieur de la trajectoire.

Une autre caractéristique importante de l'invention consiste en ce que le dispositif d'attelage se compose d'une pièce d'attelage et de deux chapes, que la pièce d'attelage est articulée d'une part au bâti par la liaison de pivotement et d'autre part aux chapes, et que les chapes sont conçues de sorte qu'elles puissent s'articuler aux deux bras inférieurs.

La machine peut alors avantageusement être attelée à un tracteur dont les bras inférieurs sont maintenus parallèles entre eux. En sus, les chapes permettent à l'axe de la liaison de pivotement d'être fortement incliné vers l'avant, ce qui contribue à améliorer l'efficacité globale de l'invention. En outre, par le degré de liberté supplémentaire qu'elles confèrent au dispositif d'attelage dans ses mouvements par rapport aux bras inférieurs, les chapes réduisent les contraintes de torsion qui s'exercent sur le bâti et prolongent la durée de vie de la machine.

D'autres caractéristiques et avantages de l'invention ressortiront de la description ci-après avec référence aux dessins annexés qui représentent, à titre d'exemple non limitatif, plusieurs formes de réalisation de la machine agricole selon l'invention.

Sur ces dessins:
- la figure 1 représente une vue de dessus d'une machine selon l'invention en ligne droite;
- la figure 2 représente une vue de dessus d'une machine selon l'invention avec le dispositif d'attelage et les roues tournés de manière à suivre une trajectoire courbe vers la droite;
- la figure 3 représente une vue de gauche d'une machine selon l'invention en ligne droite attelée à un tracteur ;
- la figure 4 représente à plus grande échelle une vue de gauche partielle d'une machine selon l'invention en ligne droite ;
- la figure 5 représente à plus grande échelle une vue de face partielle d'une machine selon l'invention, dont le dispositif d'attelage suit une variante de réalisation, le dispositif d'attelage et les roues étant tournés de manière à suivre une trajectoire courbe vers la droite;
- la figure 6 représente à plus grande échelle une vue de droite partielle d'une machine selon l'invention, dont le dispositif d'attelage suit la variante de réalisation de la figure 5, le dispositif d'attelage et les roues étant tournés de manière à suivre une trajectoire courbe vers la droite;
- la figure 7 représente à plus grande échelle une vue de face partielle d'une machine selon l'invention, dont le dispositif d'attelage suit une autre variante de réalisation, le dispositif d'attelage et les roues étant tournés de manière à suivre une trajectoire courbe vers la droite;
- la figure 8 représente à plus grande échelle une vue de droite partielle d'une machine selon l'invention, dont le dispositif d'attelage suit la variante de réalisation de la figure 7, le dispositif d'attelage et les roues étant tournés de manière à suivre une trajectoire courbe vers la droite;
- la figure 9 représente une vue de dessus d'une variante de réalisation de la machine en ligne droite ;
- la figure 10 représente une vue de dessus d'une variante de réalisation de la machine en ligne droite.

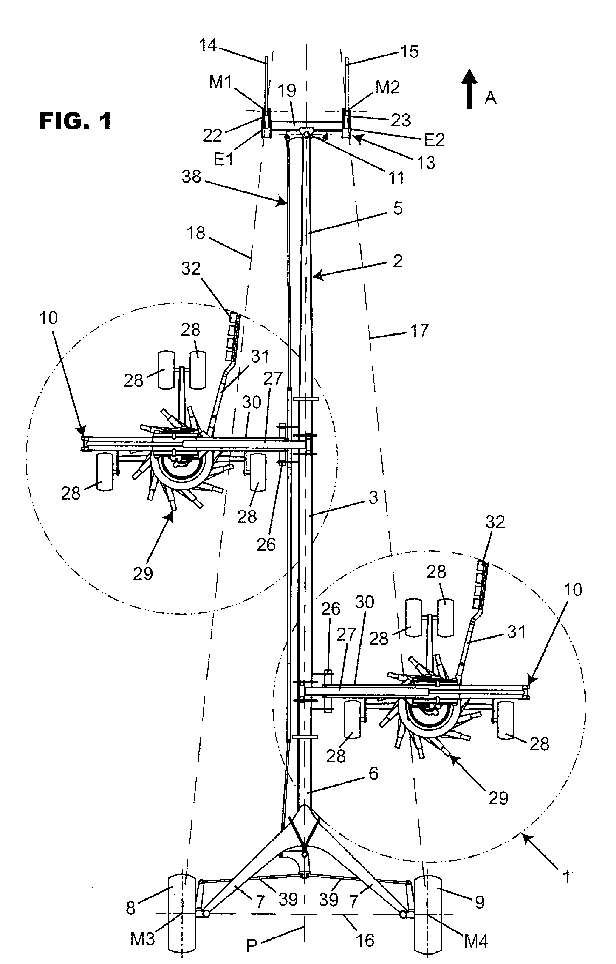

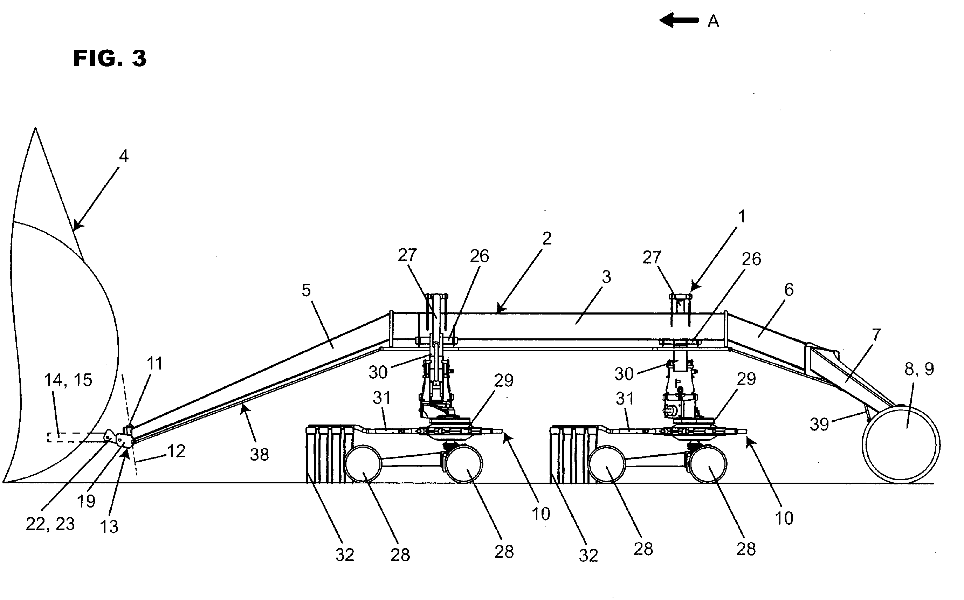

Ainsi qu'il ressort de la figure 1, la machine (1) selon l'invention comporte un bâti (2). Celui-ci est notamment constitué par une poutre centrale (3) qui est sensiblement horizontale. Dans la variante de réalisation présentée sur les figures 1 à 3, la poutre centrale (3) est prolongée dans sa partie située vers le tracteur (4) - représenté partiellement à la figure 3 - par une poutre frontale (5) rigidement liée à la poutre centrale (3) et qui est inclinée vers le sol. A son extrémité arrière, la poutre centrale (3) est prolongée par une poutre postérieure (6) rigidement liée à la poutre centrale (3) et qui est inclinée vers le sol. La poutre postérieure (6) est solidaire de deux supports divergents (7) ayant chacun une roue (8, 9) qui repose sur le sol. La machine (1) selon l'invention pourrait comporter un nombre de roues supérieur à deux. Au moins un dispositif de travail (10) est relié à la poutre centrale (3). Le tracteur (4) sert à déplacer la machine dans un sens d'avance (A) et à animer les dispositifs de travail (10). La poutre frontale (5) présente une liaison de pivotement (11) d'axe (12) avec un dispositif d'attelage (13) conçu pour être connecté aux deux bras inférieurs (14, 15) du tracteur (4). De plus, le centre de gravité de la machine (1) est situé entre les roues (8, 9) et le dispositif d'attelage (13). Cette caractéristique est respectée quels que soient le nombre, la forme et la disposition du ou des dispositifs de travail (10). Elle garantit que la machine (1) soit toujours en appui sur au moins un des bras inférieurs (14, 15).

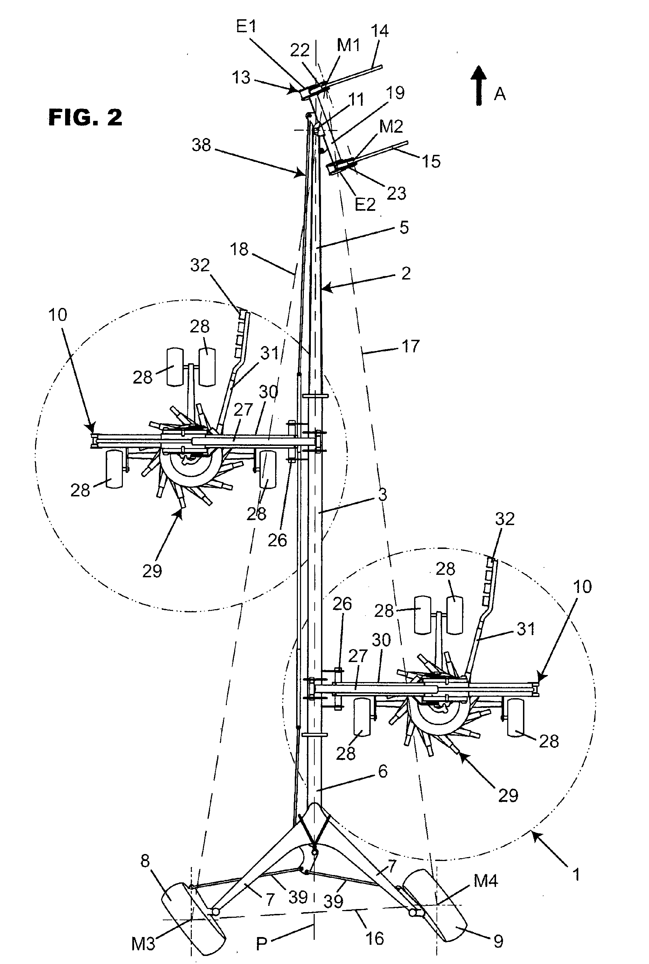

Ainsi qu'il apparaît sur les figures 1 et 2, le triangle de sustentation est défini par un premier côté (16), un deuxième côté (17) et un troisième côté (18). L'articulation entre le dispositif d'attelage (13) et le bras inférieur (14) situé à gauche dans le sens d'avance (A), possède un milieu (M1). L'articulation entre le dispositif d'attelage (13) et le bras inférieur (15) situé à droite dans le sens d'avance (A), possède un milieu (M2). La roue (8) possède un milieu (M3) et la roue (9) un milieu (M4). Le premier côté (16) relie le milieu (M3) au milieu (M4). Lorsque la machine est en ligne droite telle que représentée sur la figure 1, le deuxième côté (17) relie le milieu (M2) au milieu (M4), tandis que le troisième côté (18) relie le milieu (M1) au milieu (M3). Le dispositif d'attelage (13) comprend une pièce d'attelage (19) qui s'étend entre une première extrémité (E1) et une deuxième extrémité (E2).

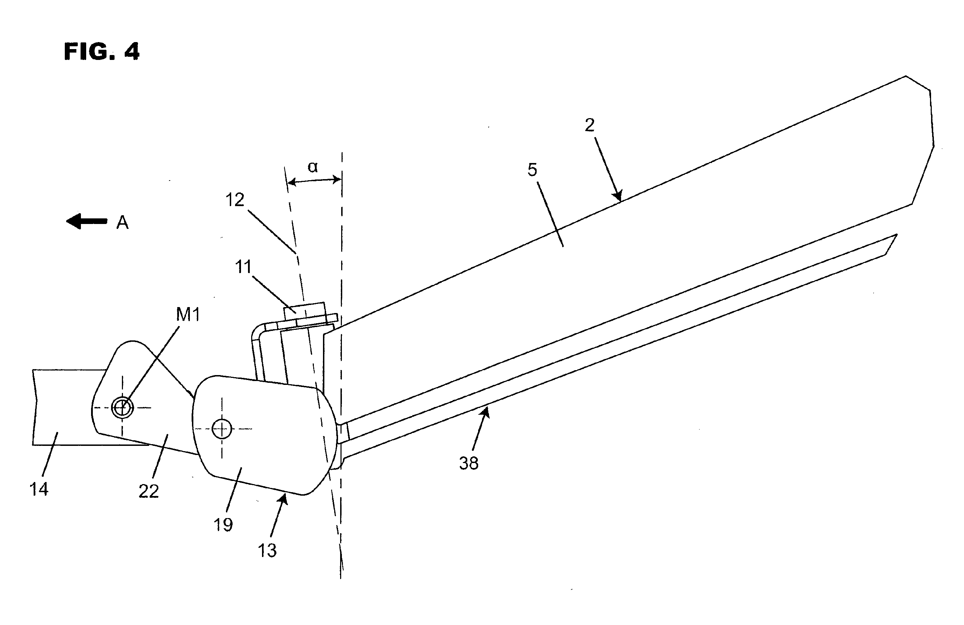

La figure 1 montre un plan (P) sensiblement vertical et sensiblement parallèle au sens d'avance (A). Ainsi que le montre la figure 4, la projection de l'axe (12) de la liaison de pivotement (11) sur le plan (P) présente une inclinaison vers le sens d'avance (A) en suivant une direction du sol vers le haut. Cette inclinaison est matérialisée par l'angle (α). Les figures 2, 5 et 6 représentent la machine (1) dans une configuration où elle suit une trajectoire courbe vers la droite. La trajectoire suivie impose au dispositif d'attelage (13) de pivoter par rapport au bâti (2) autour de l'axe (12), alors l'angle (α) fait que le dispositif d'attelage (13) bascule dans un plan sensiblement vertical et sensiblement perpendiculaire au sens d'avance (A), et que la deuxième extrémité (E2) située du côté intérieur de la trajectoire est à une hauteur plus importante que la première extrémité (E1). Sur la plupart des tracteurs, les bras inférieurs (14, 15) sont commandés par des vérins simple effet et s'opposent à un effort exercé sur eux vers le sol mais ne s'opposent pas à un effort qui tend à les relever. Ainsi, la différence de hauteur entre les extrémités (E1) et (E2) génère un appui plus important sur le bras inférieur (14) situé du côté extérieur de la trajectoire, tandis que le bras inférieur (15) situé du côté intérieur de la trajectoire se trouve délesté.

Il en résulte que le triangle de sustentation change par rapport au cas, représenté sur la figure 1, où la machine est en ligne droite. Le nouveau triangle de sustentation est représenté sur la figure 2. Dans ce cas, le deuxième côté (17) et le troisième côté (18) passent tous les deux par le milieu (M1), ainsi le triangle de sustentation ne passe plus par le milieu (M2) puisque celui-ci n'est pas soumis à un effort vers le sol. Le premier côté (16) reste inchangé.

Or, le centre de gravité est localisé à l'intérieur du triangle de sustentation et de préférence au voisinage d'un plan médian du bâti (2) parallèle au plan (P).

Par conséquent, le centre de gravité reste à une certaine distance du troisième côté (18). Il faut noter que sans l'inclinaison revendiquée de l'axe (12), le deuxième côté (17) et le troisième côté (18) pourraient passer par le milieu (M2), ce qui réduirait la distance séparant le centre de gravité du troisième côté (18) et rendrait donc la machine (1) potentiellement instable. Au contraire, l'axe (12) incliné rend improbable que, dans des conditions normales d'utilisation de la machine (1), une accélération latérale orientée du deuxième côté (17) vers le troisième côté (18) - telle que l'accélération centrifuge - fasse sortir le centre de gravité du triangle de sustentation et que celui-ci se trouve à l'extérieur du troisième côté (18).

Ainsi, lorsqu'au transport l'agriculteur aborde un virage, il peut maintenir une vitesse de roulage importante sans craindre de voir la machine (1) basculer vers l'extérieur de la courbe. Il lui est également possible d'opérer les manoeuvres de demi-tour en bout de parcelle, à allure élevée et avec un rayon de braquage relativement petit, ce qui améliore la maniabilité de la machine (1). En sus, une trajectoire courbe peut être négociée avec une sécurité plus grande même en présence de nombreux creux et bosses. Un cas d'utilisation fréquent est celui où l'ensemble tracteur (4) - machine (1) tourne sur un champ en dévers, le côté de la machine (1) situé vers l'extérieur de la trajectoire courbe étant, du fait du dévers, plus bas que le côté opposé. L'axe (12) incliné permet d'opérer une telle manoeuvre sur un dévers plus important que ce qu'autoriserait une machine conventionnelle.

De préférence, la projection de l'axe (12) sur le plan (P) forme dans le plan (P) un angle (α) inférieur ou égal à 20° par rapport à un plan vertical sensiblement perpendiculaire au sens d'avance (A). Une valeur d'angle n'excédant pas 20° permet de maintenir les contraintes de torsion sur le bâti (2) dans des proportions raisonnables.

L'effet de l'invention est optimal pour une valeur d'angle (α) comprise entre 2° et 15°.

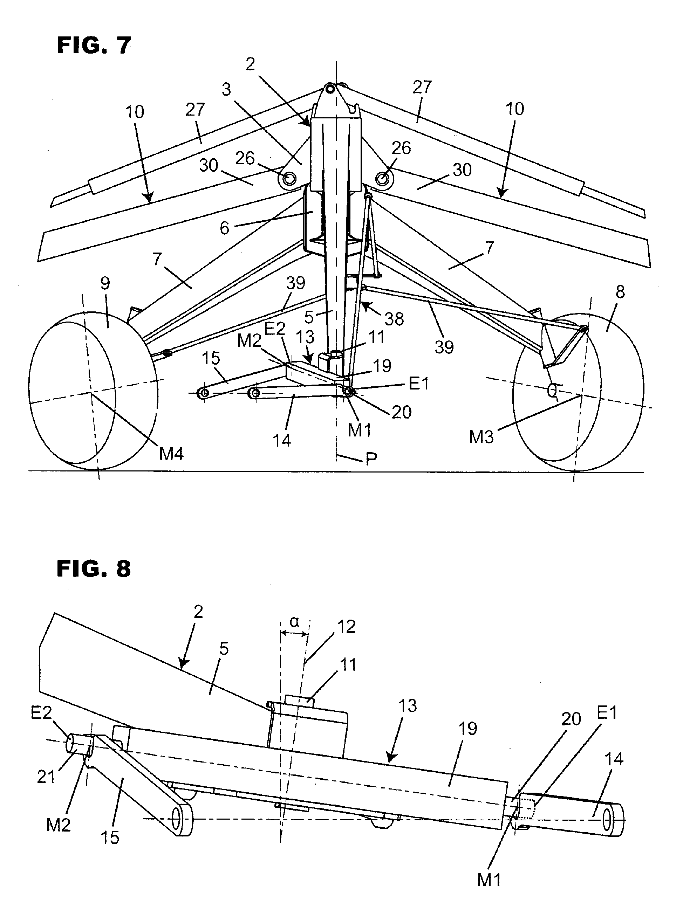

Suivant une variante de réalisation illustrée par les figures 7 et 8, le dispositif d'attelage (13) est formé par une pièce d'attelage (19) qui est articulée au bâti (2) par la liaison de pivotement (11). De plus, la pièce d'attelage (19) comporte vers chacune de ses extrémités un tenon (20, 21). Dans cette variante de réalisation, l'extrémité (E1) est celle du tenon (20) tandis que l'extrémité (E2) est celle du tenon (21).

Chaque tenon (20, 21) est conçu pour venir s'articuler au bras inférieur (14, 15) correspondant du tracteur (4). Les articulations ainsi définies ont pour milieux respectifs (M1) et (M2). La pièce d'attelage (19) peut prendre la forme d'une barre. Préférentiellement, l'axe (12) de la liaison de pivotement (11) est disposé à distance sensiblement égale des milieux (M1, M2). De préférence, la liaison de pivotement (11) et les tenons (20, 21) sont sensiblement alignés. La pièce d'attelage (19) pourrait aussi prendre la forme d'un arceau, auquel cas la liaison de pivotement (11) et les tenons (20, 21) pourraient ne pas être alignés.

Dans la variante de réalisation précitée, lorsque le dispositif d'attelage (13) tourne par rapport au bâti (2) autour de la liaison de pivotement (11), l'un des tenons (20, 21) se trouve à une hauteur plus importante que le tenon opposé. Il en résulte que le tenon opposé génère un effort vers le sol sur le bras inférieur (14, 15) correspondant, tandis que l'autre bras inférieur est forcé de se relever. Sur les figures 7 et 8, la machine (1) est représentée dans une configuration où elle suit une trajectoire courbe vers la droite. Il y apparaît que le milieu (M2) disposé à l'intérieur de la trajectoire, est à une hauteur plus importante que le milieu (M1). Le bras inférieur (15) est donc relevé par rapport au bras inférieur (14).

Cette variante de réalisation peut être économiquement avantageuse pour un tracteur (4) dont les bras inférieurs (14, 15) ont la possibilité de se relever librement d'une certaine distance. Ainsi, il est connu d'assurer la fonction de relevage et d'abaissement de chacun des bras inférieurs (14, 15) au moyen d'un vérin hydraulique simple effet. L'agriculteur ajuste sa hauteur au moyen d'un levier de commande agissant sur la centrale hydraulique du tracteur (4). Une fois sa hauteur réglée, le vérin simple effet s'oppose à un effort s'exerçant sur lui vers le sol mais peut remonter s'il est délesté. Chaque vérin est le plus souvent complété par un tirant qui est relié au bras inférieur (14, 15) correspondant par une articulation et qui a une longueur ajustable manuellement par l'agriculteur. Au voisinage de cette articulation, le tirant ou le bras inférieur (14, 15) peut être muni d'un trou oblong. Ce dernier permet au bras inférieur (14, 15) de se relever librement d'une certaine distance. Ainsi, lorsque le dispositif d'attelage, suivant la variante de réalisation illustrée par les figures 7 et 8, pivote, tel que décrit précédemment, le bras inférieur (15) peut suivre le mouvement vers le haut que lui impose le tenon (21).

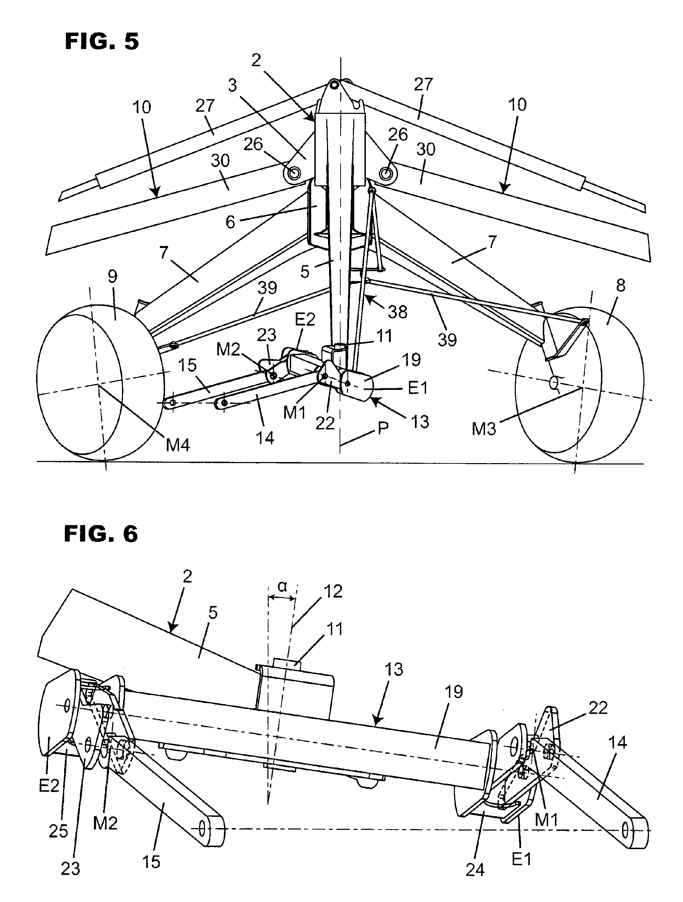

Suivant une autre variante de réalisation illustrée par les figures 5 et 6, le dispositif d'attelage (13) se compose d'une pièce d'attelage (19) et de deux chapes (22, 23). La pièce d'attelage (19) est articulée d'une part au bâti (2) par la liaison de pivotement (11) et d'autre part aux chapes (22, 23). La pièce d'attelage s'étend entre la première extrémité (E1) et la deuxième extrémité (E2). Les chapes (22, 23) sont conçues de sorte qu'elles puissent s'articuler aux deux bras inférieurs (14, 15), formant ainsi des articulations de milieux respectifs (M1) et (M2). La pièce d'attelage (19) peut prendre la forme d'une barre aux extrémités de laquelle sont articulées les chapes (22, 23). La pièce d'attelage (19) est avantageusement munie d'une butée (24) disposée au voisinage de l'extrémité (E1) et d'une butée (25) disposée au voisinage de l'extrémité (E2). Chacune des butées (24, 25) permet de limiter le mouvement de la chape (22, 23) correspondante par rapport à la pièce d'attelage (19) suivant une direction vers le haut. Préférentiellement, l'axe (12) de la liaison de pivotement (11) est disposé à distance sensiblement égale des milieux (M1, M2). De préférence, la liaison de pivotement (11) d'une part, les articulations entre les chapes (22, 23) et la pièce d'attelage (19) d'autre part, sont sensiblement alignées. La pièce d'attelage (19) pourrait aussi prendre la forme d'un arceau, auquel cas la liaison de pivotement (11) d'une part, les articulations entre les chapes (22, 23) et la pièce d'attelage (19) d'autre part, pourraient ne pas être alignées.

Dans la variante de réalisation susnommée, lorsque le dispositif d'attelage (13) tourne par rapport au bâti (2) autour de la liaison de pivotement (11), l'une des chapes (22, 23) pivote vers le haut tandis que l'autre chape pivote vers le bas, et les bras inférieurs (14, 15) du tracteur (4) restent parallèles entre eux. Sur les figures 5 et 6, la machine (1) est représentée dans une position où elle suit une trajectoire courbe vers la droite. La chape (23), disposée à l'intérieur de la trajectoire, est pivotée vers le bas par rapport à la pièce d'attelage (19), tandis que la chape (22) est pivotée vers le haut. Ainsi, le bras (15) est délesté tandis que le bras (14) supporte un effort dirigé vers le sol.

Cette variante de réalisation est avantageuse lorsque la machine (1) est attelée à un tracteur (4) dont les bras inférieurs (14, 15) sont maintenus parallèles entre eux, l'un ne pouvant être plus haut que l'autre. Ce parallélisme contraint les deux chapes (22, 23) à pivoter ainsi que décrit ci-avant.

En sus, les chapes (22, 23) permettent à l'axe (12) de la liaison de pivotement (11) d'être fortement incliné vers l'avant. En effet, plus l'inclinaison est marquée, plus la différence de hauteur imposée aux extrémités (E1) et (E2) lorsque le bâti (2) pivote par rapport au dispositif d'attelage (13), est importante, et plus l'effort exercé sur le bras inférieur (14) en appui est important. Cela contribue à améliorer l'efficacité globale de l'invention. On prendra alors soin de concevoir des chapes (22, 23) suffisamment longues, c'est-à-dire présentant une distance suffisamment importante entre l'articulation avec la pièce d'attelage (19) et l'articulation avec le bras inférieur (14, 15).

En outre, par le degré de liberté supplémentaire qu'elles confèrent au dispositif d'attelage (13) dans ses mouvements par rapport aux bras inférieurs (14, 15), les chapes (22, 23) réduisent les contraintes mécaniques, essentiellement de torsion, qui s'exercent sur le bâti (2). En effet, ainsi qu'expliqué précédemment, lorsque la pièce d'attelage (19) est pivotée par rapport au bâti (2), l'une de ses extrémités est plus haute que l'autre, donc la pièce d'attelage (19) n'est pas parallèle au sol. Or, les roues (8, 9) sont toujours en contact avec le sol et les bras inférieurs (14, 15) restent tous les deux à la même hauteur du sol. Les chapes (22, 23) évitent que le bâti (2) ne se torde autour de son axe longitudinal et prolongent donc la durée de vie de la machine (1).

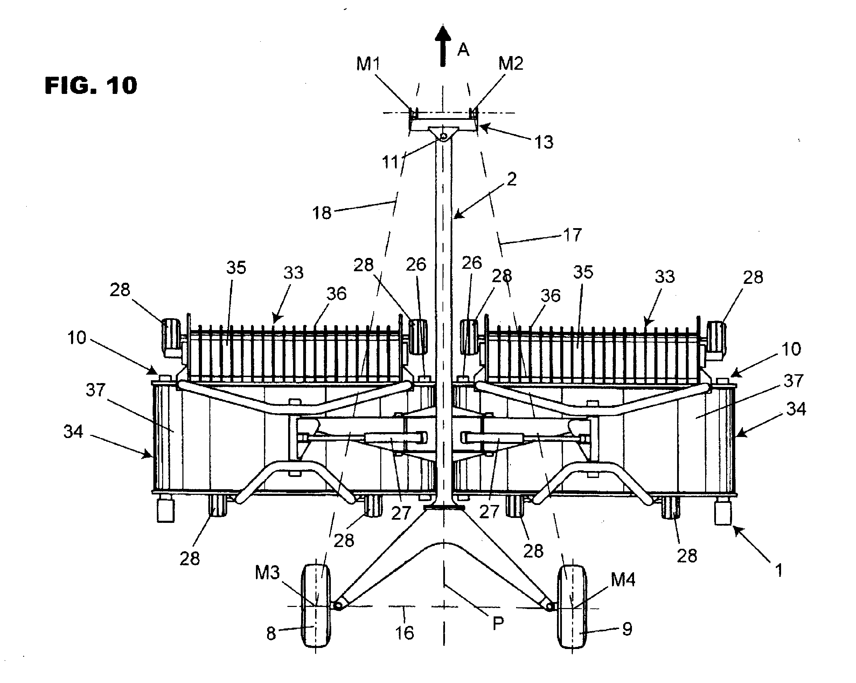

Suivant une variante de réalisation présentée notamment sur les figures 1 et 10, chaque dispositif de travail (10) est disposé entre le dispositif d'attelage (13) et les roues (8, 9). Il est ainsi possible d'avoir deux dispositifs de travail (10) qui soient chacun reliés à un côté du bâti (2) par une articulation (26) d'axe sensiblement horizontal. Chaque articulation (26) autorise le dispositif de travail (10) correspondant à se déplacer entre une position de travail et une position de transport. Ce déplacement est opéré au moyen d'un vérin (27). Chaque dispositif de travail (10) est muni d'au moins une roue porteuse (28). Dans la position de travail, chaque dispositif de travail (10) s'étend suivant un plan sensiblement horizontal et suivant une direction sensiblement perpendiculaire au sens d'avance (A). La roue porteuse (28) touche le sol. Dans la position de transport, chaque dispositif de travail (10) est relevé sensiblement à la verticale de manière à réduire la largeur totale de la machine (1). Il est également prévu une position relevée, située entre la position de travail et la position de transport. Dans cette position, chaque dispositif de travail (10) est relevé à une faible distance du sol de manière à ce qu'il n'entre pas en contact avec le fourrage au sol. Ainsi que représenté sur la figure 1, les dispositifs de travail (10) peuvent être décalés suivant une direction parallèle au sens d'avance (A), mais ils peuvent aussi - à l'instar de la figure 10 - être disposés de manière sensiblement symétrique par rapport au bâti (2). Il est également envisageable d'avoir quatre dispositifs de travail (10) arrangés par paire de part et d'autre du bâti (2).

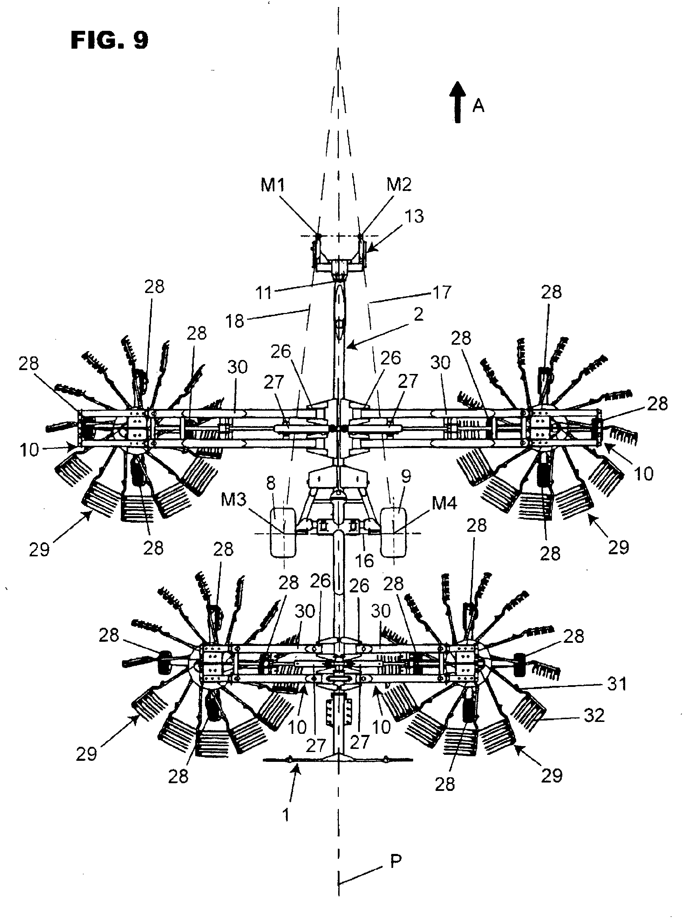

Suivant une variante de réalisation présentée à la figure 9, la machine (1) comporte au moins un dispositif de travail (10) disposé entre le dispositif d'attelage (13) et les roues (8, 9), ainsi qu'au moins un dispositif de travail (10) disposé en arrière des roues (8, 9). Dans cet exemple, la machine (1) comprend deux dispositifs de travail (10) arrangés en avant des roues (8, 9) et symétriquement par rapport au bâti (2), ainsi que deux dispositifs de travail (10) arrangés en arrière des roues (8, 9) et symétriquement par rapport au bâti (2). Chacun des dispositifs de travail (10) est muni d'au moins une roue porteuse (28), il est relié au bâti (2) par une articulation (26) d'axe sensiblement horizontal, et peut être déplacé entre une position de travail, une position relevée et une position de transport au moyen d'un vérin (27). Dans la position de transport, il est relevé sensiblement à la verticale. Dans la position de travail, il s'étend suivant un plan sensiblement horizontal et la roue porteuse (28) touche le sol.

Dans la position relevée, la roue porteuse (28) de chaque dispositif de travail (10) ne touche pas le sol. Il en résulte que les seules roues qui portent la machine (1) sont les roues (8, 9) à l'arrière du bâti (2). Or, les dispositifs de travail (10) s'étendent latéralement bien davantage que les roues (8, 9) à l'arrière du bâti (2), ce qui augmente la propension de la machine (1) à basculer latéralement lorsqu'elle suit une trajectoire courbe. L'axe (12) incliné permet alors d'augmenter l'appui de la machine (1) sur le bras inférieur (14, 15) situé du côté extérieur à la trajectoire. Il s'en suit que la machine (1) est plus stable lors des virages négociés en position relevée.

Suivant une variante de réalisation présentée notamment sur les figures 1 et 9, au moins un des dispositifs de travail (10) se compose d'une roue râteleuse (29) qui est entraînée en rotation à partir du tracteur autour d'un axe de rotation sensiblement vertical durant le travail. La roue râteleuse (29) est portée par un bras (30) qui peut pivoter par rapport au bâti (2) au moyen de l'articulation (26) d'axe sensiblement horizontal. Le bras (30) pourrait aussi être muni de deux roues râteleuses (29). La roue râteleuse (29) est équipée de bras porte-outils (31) portant à leurs extrémités des outils de travail (32) tels que des fourches pour déplacer le fourrage. Les bras porte-outils (31) peuvent pivoter autour de leurs axes géométriques longitudinaux respectifs afin de former un ou plusieurs andains. Alternativement, une roue râteleuse (29) avec des outils de travail (32) non commandés pourraient équiper la machine (1) selon l'invention, afin de faner le fourrage ou bien de le disposer en un ou plusieurs andains.

Suivant une variante de réalisation montrée à la figure 10, au moins un des dispositifs de travail (10) se compose d'un dispositif de ramassage (33) des végétaux au sol et d'au moins un dispositif de déplacement (34) des végétaux ramassés. Le dispositif de ramassage (33) de végétaux au sol est du type pick-up. Il comporte un rotor (35) avec des dents (36) commandées qui est entraîné en rotation de telle sorte que les dents (36) ramassent les végétaux au niveau du sol, les soulèvent et les projettent dans une direction opposée au sens d'avance (A). A l'arrière du dispositif de ramassage (33) se trouve le dispositif de déplacement (34) des végétaux. Ce dernier se situe à proximité immédiate du dispositif de ramassage (33) de sorte qu'il reçoive les végétaux projetés vers l'arrière par celui-ci. Le dispositif de déplacement (34) est constitué par une bande transporteuse (37) qui est entraînée durant le travail de sorte qu'elle déplace les végétaux transversalement au dispositif de ramassage (33), vers le côté droit ou vers le côté gauche de la machine (1). Les végétaux sont alors redéposés au sol sous la forme d'un andain en vue de leur reprise ultérieure. La machine (1) peut comporter plusieurs dispositifs de ramassage (33) et dispositifs de déplacement (34) placés côte à côte, en vue d'augmenter sa largeur de travail.

Préférentiellement, les roues (8, 9) sont directionnelles. A cet effet, est prévu un dispositif à tringles (38), représenté notamment sur les figures 1 et 2, qui est articulé au dispositif d'attelage (13). Le dispositif à tringles (38) comprend notamment deux tringles postérieures (39), chacune étant reliée à un moyeu portant une roue (8, 9). Chaque moyeu est articulé au support divergent (7) correspondant suivant un axe sensiblement vertical de sorte que la roue (8, 9) correspondante puisse pivoter dans un plan sensiblement horizontal. Ainsi qu'il ressort de la figure 2, lorsque le dispositif d'attelage (13) pivote vers la droite par rapport au bâti (2), il met en mouvement le dispositif à tringles (38), lequel oriente alors les roues (8, 9) dans la direction opposée, soit vers la gauche dans cet exemple.

Les roues (8, 9) directionnelles réduisent le rayon de braquage de l'ensemble tracteur (4) - machine (1) et permettent d'augmenter la vitesse de roulage en courbe, sans compromettre une stabilité de fonctionnement déjà grandement améliorée par l'axe (12) incliné de la liaison de pivotement (11) dont est munie la machine (1) selon l'invention.

Il est bien évident que l'invention n'est pas limitée aux variantes de réalisation décrites ci-dessus et représentées sur les figures annexées. Elle peut s'appliquer à d'autres machines du domaine de la fenaison. Des modifications restent possibles, notamment en ce qui concerne la constitution ou le nombre des divers éléments ou par substitution d'équivalents techniques, sans pour autant sortir du domaine de protection des revendications annexés.

## Revendications

1. Machine (1) agricole de fenaison destinée à être attelée aux bras inférieurs (14, 15) d'un tracteur (4), comportant un bâti (2) supporté au sol par des roues (8, 9) et au moins un dispositif de travail (10) relié audit bâti (2), ledit bâti (2) étant dans sa partie avant en liaison de pivotement (11) avec un dispositif d'attelage (13) conçu pour être connecté auxdits deux bras inférieurs (14, 15), le centre de gravité de ladite machine (1) étant situé entre lesdites roues (8, 9) et ledit dispositif d'attelage (13), ***caractérisée en ce que*** la projection de l'axe (12) de ladite liaison de pivotement (11) sur un plan (P) sensiblement vertical et sensiblement parallèle au sens d'avance (A), présente une inclinaison vers le sens d'avance (A) en suivant une direction du sol vers le haut.

2. Machine (1) agricole suivant la revendication 1, ***caractérisée en ce que*** la projection dudit axe sur ledit plan (P) forme dans ledit plan (P) un angle (α) inférieur ou égal à 20° par rapport à un plan vertical sensiblement perpendiculaire au sens d'avance (A).

3. Machine (1) agricole suivant la revendication 2, ***caractérisée en ce que*** ledit angle (α) est compris entre 2° et 15°.

4. Machine (1) agricole suivant la revendication 1, ***caractérisée en ce que*** ledit dispositif d'attelage (13) est formé par une pièce d'attelage (19), que ladite pièce d'attelage (19) est articulée audit bâti (2) par ladite liaison de pivotement (11) et que ladite pièce d'attelage (19) comporte deux tenons (20, 21) conçus de sorte qu'ils puissent s'articuler auxdits deux bras inférieurs (14, 15).

5. Machine (1) agricole suivant la revendication 1, ***caractérisée en ce que*** ledit dispositif d'attelage (13) se compose d'une pièce d'attelage (19) et de deux chapes (22, 23), que ladite pièce d'attelage (19) est articulée d'une part audit bâti (2) par ladite liaison de pivotement (11) et d'autre part auxdites chapes (22, 23), et que lesdites chapes (22, 23) sont conçues de sorte qu'elles puissent s'articuler auxdits deux bras inférieurs (14, 15).

6. Machine (1) agricole suivant la revendication 1, ***caractérisée en ce que*** chaque dispositif de travail (10) est disposé entre ledit dispositif d'attelage (13) et lesdites roues (8, 9).

7. Machine (1) agricole suivant la revendication 1, *caractérisée en ce qu*'elle comporte au moins un dispositif de travail (10) disposé entre ledit dispositif d'attelage (13) et lesdites roues (8, 9) ainsi qu'au moins un dispositif de travail (10) disposé en arrière desdites roues (8, 9).

8. Machine (1) agricole suivant la revendication 6 ou 7, ***caractérisée en ce* qu'**au moins un dispositif de travail (10) se compose d'une roue râteleuse (29) dont l'axe de rotation est sensiblement vertical en position de travail.

9. Machine (1) agricole suivant la revendication 6 ou 7, ***caractérisée en ce* qu'**au moins un dispositif de travail (10) se compose d'un dispositif de ramassage (33) de végétaux au sol et d'un dispositif de déplacement (34) des végétaux ramassés, et que ledit dispositif de déplacement (34) se situe à proximité dudit dispositif de ramassage (33) et déplace lesdits végétaux transversalement audit dispositif de ramassage (33).

10. Machine (1) agricole suivant la revendication 1, ***caractérisée en ce que*** lesdites roues (8, 9) sont directionnelles.

## Patentansprüche

1. Landwirtschaftliche Heuwerbungsmaschine (1), die dazu bestimmt ist, an die unteren Arme (14, 15) eines Traktors (4) angekuppelt zu werden, mit einem Gestell (2), das am Boden von Rädern (8, 9) abgestützt wird, und mindestens einer mit dem Gestell (2) verbundenen Arbeitsvorrichtung (10), wobei das Gestell (2) in seinem vorderen Teil in Schwenkverbindung (11) mit einer Kupplungsvorrichtung (13) steht, die dazu vorgesehen ist, an die beiden unteren Arme (14, 15) angeschlossen zu werden, wobei der Schwerpunkt der Maschine (1) zwischen den Rädern (8, 9) und der Kupplungsvorrichtung (13) angeordnet ist, ***dadurch gekennzeichnet,* dass** die Projektion der Achse (12) der Schwenkverbindung (11) auf eine im Wesentlichen vertikale und zur Vorschubrichtung (A) im Wesentlichen parallele Ebene (P) eine Neigung in Vorschubrichtung (A) entlang einer Richtung vom Boden nach oben aufweist.

2. Landwirtschaftliche Maschine (1) nach Anspruch 1, ***dadurch gekennzeichnet,* dass** die Projektion der Achse auf die Ebene (P) in der Ebene (P) einen Winkel (α) bildet, der kleiner oder gleich 20° in Bezug zu einer auf die Vorschubrichtung (A) im Wesentlichen senkrechten Vertikalebene ist.

3. Landwirtschaftliche Maschine (1) nach Anspruch 2, ***dadurch gekennzeichnet,* dass** der Winkel (α) zwischen 2° und 15° beträgt.

4. Landwirtschaftliche Maschine (1) nach Anspruch 1, ***dadurch gekennzeichnet,* dass** die Kupplungsvorrichtung (13) von einem Kupplungsstück (19) gebildet ist, dass das Kupplungsstück (19) am Gestell (2) durch die Schwenkverbindung (11) angelenkt ist, und dass das Kupplungsstück (19) zwei Zapfen (20, 21) umfasst, die derart ausgeführt sind, dass sie an den unteren Armen (14, 15) angelenkt werden können.

5. Landwirtschaftliche Maschine (1) nach Anspruch 1, ***dadurch gekennzeichnet,* dass** die Kupplungsvorrichtung (13) ein Kupplungsstück (19) und zwei Gabelstücke (22, 23) umfasst, dass das Kupplungsstück (19) einerseits am Gestell (2) durch die Schwenkverbindung (11) und andererseits an den Gabelstücken (22, 23) angelenkt ist, und dass die Gabelstücke (22, 23) derart ausgeführt sind, dass sie an den unteren Armen (14, 15) angelenkt werden können.

6. Landwirtschaftliche Maschine (1) nach Anspruch 1, ***dadurch gekennzeichnet,* dass** jede Arbeitsvorrichtung (10) zwischen der Kupplungsvorrichtung (13) und den Rädern (8, 9) angeordnet ist.

7. Landwirtschaftliche Maschine (1) nach Anspruch 1, ***dadurch gekennzeichnet,* dass** sie mindestens eine Arbeitsvorrichtung (10) umfasst, die zwischen der Kupplungsvorrichtung (13) und den Rädern (8, 9) angeordnet ist, sowie mindestens eine Arbeitsvorrichtung (10), die rückwärts von den Rädern (8, 9) angeordnet ist.

8. Landwirtschaftliche Maschine (1) nach Anspruch 6 oder 7, ***dadurch gekennzeichnet,* dass** mindestens eine Arbeitsvorrichtung (10) ein Rechrad (29) umfasst, dessen Drehachse in Arbeitsstellung im Wesentlichen vertikal ist.

9. Landwirtschaftliche Maschine (1) nach Anspruch 6 oder 7, ***dadurch gekennzeichnet,* dass** mindestens eine Arbeitsvorrichtung (10) eine Vorrichtung (33) zum Einsammeln der am Boden liegenden Pflanzen und eine Vorrichtung (34) zur Beförderung der eingesammelten Pflanzen umfasst, und dass sich die Beförderungsvorrichtung (34) in der Nähe der Einsammelvorrichtung (33) befindet und die Pflanzen quer zur Einsammelvorrichtung (33) verschiebt.

10. Landwirtschaftliche Maschine (1) nach Anspruch 1, ***dadurch gekennzeichnet,* dass** die Räder (8, 9) lenkbar sind.

## Claims

1. Agricultural haymaking machine (1) intended to be hitched to the lower arms (14, 15) of a tractor (4), comprising a frame (2) supported on the ground by wheels (8, 9) and at least one work device (10) connected to the said frame (2), the said frame (2) being in its front part in pivoting connection (11) with a hitching device (13) configured to be connected to the said two lower arms (14, 15), the center of gravity of the said machine (1) being situated between the said wheels (8, 9) and the said hitching device (13), ***characterized in that*** the projection of the axis (12)of the said pivoting connection (11) on a plane (P) which is substantially vertical and substantially parallel to the direction of advance (A), has an inclination towards the direction of advance (A) following a direction of the ground upward.

2. Agricultural machine (1) according to Claim 1, ***characterized in that*** the projection of the said axis on the said plane (P) forms in the said plane (P) an angle (α) less than or equal to 20° with respect to a vertical plane substantially perpendicular to the direction of advance (A).

3. Agricultural machine (1) according to Claim 2, ***characterized in that*** the said angle (α) is comprised between 2° and 15°.

4. Agricultural machine (1) according to Claim 1, ***characterized in that*** the said hitching device (13) is formed by a hitching piece (19), that the said hitching piece (19) is articulated on the said frame (2) by the said pivoting connection (11) and that the said hitching piece (19) comprises two tenons (20, 21) configured such that they can articulate on the said two lower arms (14, 15).

5. Agricultural machine (1) according to Claim 1, ***characterized in that*** the said hitching device (13) comprises a hitching piece (19) and two yokes (22, 23), that the said hitching piece (19) is articulated on one hand on the said frame (2) by the said pivoting connection (11) and on the other hand on the said yokes (22, 23), and that the said yokes (22, 23) are configured such that they can articulate on the said two lower arms (14, 15).

6. Agricultural machine (1) according to Claim 1, ***characterized in that*** each work device (10) is arranged between the said hitching device (13) and the said wheels (8, 9).

7. Agricultural machine (1) according to Claim 1, ***characterized in that*** it comprises at least one work device (10) arranged between the said hitching device (13) and the said wheels (8, 9) as well as at least one work device (10) arranged at the rear of the said wheels (8, 9).

8. Agricultural machine (1) according to Claim 6 or 7, ***characterized in that*** at least one work device (10) comprises a raking wheel (29), the rotation axis of which is substantially vertical in the work position.

9. Agricultural machine (1) according to Claim 6 or 7, ***characterized in that*** at least one work device (10) comprises a gathering device (33) of plants lying on the ground and a moving device (34) of the gathered plants, and that the said moving device (34) is situated close to the said gathering device (33) and moves the said plants transversely to the said gathering device (33).

10. Agricultural machine (1) according to Claim 1, ***characterized in that*** the said wheels (8, 9) are directional.
